# EUROPÄISCHE PATENTSCHRIFT

(11) **EP 1 299 273 B1**
(45) Veröffentlichungstag und Bekanntmachung des Hinweises auf die Patenterteilung: **13.09.2006**
(21) Anmeldenummer: 01951661.6
(22) Anmeldetag: 09.07.2001
(51) Int. Cl.: B60S 1/38

(54) **WISCHBLATT, INSBESONDERE FÜR KRAFTFAHRZEUGE, WISCHVORRICHTUNG UND VERFAHREN ZUR HERSTELLUNG EINES WISCHBLATTES ODER EINER WISCHVORRICHTUNG.**
WIPER BLADE, PARTICULARLY FOR VEHICLES, WIPING DEVICE AND A METHOD FOR PRODUCING A WIPER BLADE OR A WIPING DEVICE.
RACLETTE, EN PARTICULIER POUR UN VEHICULE, ESSUIE-GLACE ET PROCEDE DE FABRICATION D'UNE RACLETTE OU D'UN ESSUIE-GLACE

(30) Priorität: 12.07.2000 DE 10033778
(43) Veröffentlichungstag der Anmeldung: 09.04.2003
(73) Patentinhaber: Valeo Wischersysteme GmbH, 74321 Bietigheim-Bissingen (DE)
(72) Erfinder: SCHMID, Eckhardt, 74336 Brackenheim (DE); LENZEN, Oliver, 74343 Sachsenheim (DE); SCHOLL, Wolfgang, 74376 Gemmrigheim (DE); ERNSTMEIER, Heiko, 74321 Bietigheim-Bissingen (DE)
(74) Vertreter: Jahn, Wolf-Diethart
(86) Internationale Anmeldenummer: PCT/EP2001/007857
(87) Internationale Veröffentlichungsnummer: WO 2002/004265

(56) Entgegenhaltungen:
- WO-A1-01/89890
- WO-A1-01/89891
- WO-A1-99/07586
- WO-A2-01/62559
- DE-A- 10 025 710
- DE-A- 19 856 300
- US-A- 3 696 497

## Beschreibung

Die Erfindung betrifft ein Wischblatt, insbesondere für Kraftfahrzeuge, eine Wischvorrichtung, insbesondere für Kraftfahrzeuge, und ein Verfahren zur Herstellung eines Wischblattes oder einer Wischvorrichtung, insbesondere für Kraftfahrzeuge. Hierbei weist das Wischblatt ein Wischgummi mit zwei einander gegenüberliegenden Längsnuten und ein Trageelement in Form von zwei in den Längsnuten angeordneten bandartigen, langgestreckten Federschienen auf, wobei an dem Trageelement ein Adapterelement zum Verbinden des Wischblatts mit einem antreibbaren Wischarm vorgesehen ist und wobei wenigstens an einem der freien Enden des Wischblatts ein sich in Querrichtung erstreckendes Verbindungselement zum Verbinden der sich gegenüberliegenden Federschienenenden vorgesehen ist

Bei dem Wischblatt gemäß des Oberbegriffs des Anspruchs 1 gewährleistet das Trageelement in Form von zwei bandartigen, langgestreckten Federschienen eine optimale Verteilung des vom Wischarm ausgehenden Wischblatt-Anpressdrucks an der Scheibe. Dazu ist das Trageelement im unbelasteten Zustand, wenn also das Wischblatt nicht an der Scheibe anliegt, entsprechend vorgebogen und weist eine unter anderem von der Krümmung der zu wischenden Scheibe abhängige Krümmung auf. Das Trageelement einer derartigen Wischvorrichtung ersetzt somit die aufwendige Tragbügelkonstruktion mit zwei in der Wischleiste angeordneten Federschienen, wie sie beispielsweise aus der DE-A-15 05 397 bekannt geworden sind.

Aus der DE-A-19 729 864 sind Verbindungselemente bekanntgeworden, die an den freien Enden des Wischblatts sich in Querrichtung erstrecken und die sich gegenüberliegenden Federschienenenden miteinander verbinden. Solche Verbindungselemente, in dem genannten Dokument als Halter bezeichnet, bestehen aus mehreren Halterteilen, die miteinander verbunden sind, und die auf die Enden der Federschienen aufgesteckt werden. Nachteil eines derartigen Standes der Technik ist, dass die Halter aufwendig zu montieren sind, da sie aus mehreren Einzelteilen bestehen. Außerdem ist nicht gewährleistet, dass die Halter unter größeren Belastungen, beispielsweise bei Durchfahren des Fahrzeugs einer Fahrzeugwaschanlage, aufgrund der auf die Wischvorrichtung einwirkenden Bürsten- und Lappenreinigungssystemen, demontiert wird, was eine Funktionsunfähigkeit der Wischvorrichtung zur Folge hat. Ein weiterer Nachteil einer Wischvorrichtung gemäß dem genannten Stand der Technik ist, dass durch Aufschieben der Halter auf die Enden der Federschienen die Längserstreckung der Federschienen um den für das Aufschieben benötigten Raum länger ausgestaltet sein müssen, als das zwischen den Federschienen angeordnete Wischgummi.

Der vorliegenden Erfindung liegt deshalb die Aufgabe zugrunde, den geschilderten Nachteilen des Standes der Technik abzuhelfen.

Diese Aufgabe wird bei einem Wischblatt der eingangs genannten Art erfindungsgemäß dadurch gelöst, dass das Verbindungselement an den beiden Stirnseiten der Enden der sich gegenüberliegenden Federschienen angeschweißt ist. Dadurch wird insbesondere vorteilhafterweise erreicht, dass ein Demontieren des Verbindungselements, beispielsweise in einer Fahrzeugwaschanlage, nicht möglich ist. Außerdem kann das Verbindungselement vorteilhafterweise einstückig ausgestaltet sein, wodurch eine Vormontage des Verbindungselements entfällt, was insbesondere in der Serienfertigung zu enormen Kosteneinsparungen führt.

Ein weiterer Vorteil der Erfindung ist, dass aufgrund des Anschweißens des Verbindungselements an den Stirnseiten der sich gegenüberliegenden Federschienenenden die volle Länge der Federschienen zur Aufnahme des sich zwischen den Federschienen befindenden Wischgummis genutzt werden kann. Dadurch ergeben sich insbesondere Einsparungen von Federschienenmaterial, was wiederum gerade in der Serienfertigung eine entscheidende Kosteneinsparung mit sich bringt. Die erfindungsgemäße Wischvorrichtung hat weiterhin den Vorteil, dass aufgrund der Schweißverbindung eine Erhöhung der Torsionssteifigkeit als auch der Biegesteifigkeit quer zur Wischachse erreicht wird. Dadurch wird eine Ratter- und Schwingungsneigung der Wischvorrichtung aufgrund der erhöhten Gesamtsteifigkeit reduziert. Dies schlägt sich auch in einem verbesserten Hochgeschwindigkeitsverhalten der Wischvorrichtung nieder.

Bei einer besonders vorteilhaften Ausgestaltung der Erfindung erfolgt die Schweißung senkrecht zu den Stirnseiten der Enden der sich gegenüberliegenden Federschienen, wobei die Stirnseiten der Federschienen an den Berührungsstellen mit dem Verbindungselement verbunden werden. Dies hat den Vorteil, dass an der Oberfläche der Wischvorrichtung keine Schweißnähte in Erscheinung treten, die eine Verletzungsgefahr darstellen könnten. Außerdem entfällt auch eine Nachbehandlung der Schweißstellen, beispielsweise um diese gegen Korrosion zu schützen.

Vorteilhafterweise ist die Schweißung eine Laserschweißung. Mittels einer Laserschweißung können sehr genaue Schweißungen auch von kleinen Bauteilen rationell vorgenommen werden.

Bei einer anderen Ausgestaltung der Erfindung ist eine Abdeckkappe zum Abdecken des Verbindungselements vorgesehen. Eine Abdeckkappe hat dabei den Vorteil, dass Verletzungen an dem überstehenden Verbindungselement vermieden werden. Außerdem können beim Zurückklappen der an einem Fahrzeug montierten Wischarme Beschädigungen am Fahrzeug bzw. an der Fahrzeugscheibe aufgrund des überstehenden Verbindungselements vermieden werden. Dies hat dabei den Vorteil, dass auch bei Verlust der Abdeckkappe die Funktionsfähigkeit der Wischvorrichtung nicht beeinträchtigt wird.

Nach einer Ausgestaltung der Erfindung kann die Abdeckkappe das Verbindungselement hinterschnappen, wodurch ein sicheres und einfaches Anbringen der Abdeckkappe an dem Wischblatt ermöglicht wird. Bei einer anderen Ausgestaltung der Erfindung ist das Verbindungselement ein Flachelement, das als T-Stoß an die Stirnseiten der beiden Federschienen angeordnet ist. Dies hat den Vorteil, dass das Verbindungselement aus einem bandartigen Flachelement hergestellt werden kann, was insbesondere in der Großserienfertigung vorteilhaft ist. Aufgrund der Anordnung als T-Stoß werden die Kanten der Stirnseiten der Federschienen vollständig abgedeckt, sodass keine Verletzungsgefahr an diesen Kanten besteht.

Bei Verwendung einer Abdeckkappe kann die Abdeckkappe nach einer Ausgestaltung der Erfindung den T-Stoß hinterschnappen, sodass ein sicheres Anbringen der Abdeckkappe an dem Wischblatt erreicht wird.

Bei einer Weiterbildung der Erfindung weist das Verbindungselement auf der den Federschienen zugewandten Seite im Bereich zwischen den Federschienen eine Aussparung auf. Bei Verwendung einer Abdeckkappe kann diese Aussparung insbesondere dazu geeignet sein, eine an der Abdeckkappe vorhandene Rastnase aufzunehmen. Andererseits kann die Aussparung der Art gestaltet sein, dass sie als Verlängerung des für die Aufnahme des Wischgummis vorgesehenen Zwischenraums zwischen den beiden Federschienen dient, wodurch die Baulänge des gesamten Wischblatts in Längsrichtung reduziert werden kann.

Andererseits kann vorgesehen sein, dass das Verbindungselement auf der den Federschienen zugewandten Seite im Bereich zwischen den Federschienen einen Vorsprung aufweist. Dieser Vorsprung kann insbesondere so ausgestaltet sein, dass die beiden sich zugewandten Seiten der Federschienen an je einer Seite des Vorsprungs anliegen, wodurch die Torsions- und Verbiegesteifigkeit des Wischblatts zusätzlich erhöht wird. Andererseits kann ein derartiger Vorsprung als Montagehilfe dazu dienen, dass durch Anliegender beiden Federschienen an den Vorsprung eine definierte Position der Federschienen bzw. des Verbindungselements beim Schweißen gewährleistet ist.

Eine weitere, besonders bevorzugte Ausführungsform der Erfindung sieht vor, dass die Federschienen bis auf die Stirnseiten mit einer Beschichtung, insbesondere mit einem Korrosionsschutzmittel, beschichtet sind, wobei das Verbindungselement aus einem nicht korrodierenden Material, beispielsweise aus Niro, ist. Da die Federschienen bei der Herstellung aus einem endlosen Federschienenband, das eine entsprechende Beschichtung aufweist, aufgelängt werden, weisen die Stirnseiten der Federschienen keine entsprechende Beschichtung auf. Werden, wie nach einer Ausgestaltung der Erfindung vorgeschlagen, diese Stirnseiten mit einem nicht rostenden Verbindungselement der Art verschweißt, dass die Schweißung senkrecht zu den Stirnseiten der sich gegenüberliegenden Federschienen erfolgt und die Stirnseiten der Federschienen an den Berührungsstellen mit dem Verbindung aufgrund der Schweißung verbunden werden, so tritt keine Korrosion, zumindest keine sichtbare Korrosion, an dem Wischblatt auf.

Bei einer anderen Ausbildung der Erfindung weist die der Scheibe abgewandte Seite des Wischgummis eine spoilerartige Ausgestaltung auf. Außerdem weist die der Scheibe abgewandte Seite der Abdeckkappe eine entsprechende spoilerartige Ausgestaltung auf, wodurch insbesondere bei höheren Fahrzeuggeschwindigkeiten der Anpressdruck des Wischblatts auf die Scheibe auch an den Wischblattenden vorteilhafterweise erhöht wird.

Die eingangs genannte Aufgabe wird auch gelöst durch eine Wischvorrichtung, bei welcher ein Wischblatt der zuvor beschriebenen Art verwendet wird.

Zur Lösung der eingangs genannten Aufgabe, insbesondere zur rationellen Fertigung und Herstellung eines erfindungsgemäßen Wischblattes, wird außerdem ein Verfahren vorgeschlagen, das sich dadurch kennzeichnet, dass ein bandartiges Verbindungsmaterial an die Stirnseiten der Federschienen herangeführt wird, dass das bandartige Verbindungsmaterial mit den Stirnseiten der Federschienen laserverschweißt wird und das in einem nächsten Arbeitsschritt das bandartige Verbindungsmaterial auf die Abmessungen des Verbindungselements lasergetrennt wird. Das Verbindungsmaterial kann beispielsweise als Endlosmaterial von Rollen entnommen und über entsprechende Vorrichtungen direkt den Federschienen zugeführt werden. Da das Ablängen des Verbindungsmaterials auf die Abmessungen des Verbindungselements erst nach dem Schweißvorgang erfolgt, entfällt eine komplette Vorbehandlung bzw. Vormontage des Verbindungselements. Insbesondere in der Großserienfertigung können dadurch enorme Kosteneinsparungen erreicht werden.

Weitere vorteilhafte Ausgestaltungen und Einzelheiten der Erfindung sind den Unteransprüchen und der nachfolgenden Beschreibung zu entnehmen, in der die Erfindung anhand des in der Zeichnung dargestellten Ausführungsbeispiels näher beschrieben und erläutert ist.

Es zeigen:
- Fig. 1: eine erfindungsgemäße Wischvorrichtung mit einem erfindungsgemäßen Wischblatt in Seitenansicht,
- Fig. 2 -: verschiedenartig ausgebildete Verbindungselemente
- Fig. 7: und deren Anbringung an den Stirnseiten der Federschienen, jeweils in verschiedenen Ansichten,
- Fig. 8 -: verschiedene Ansichten und Schnitte einer weiteren
- Fig. 10: erfindungsgemäßen Ausführungsform mit Abdeckkappe.

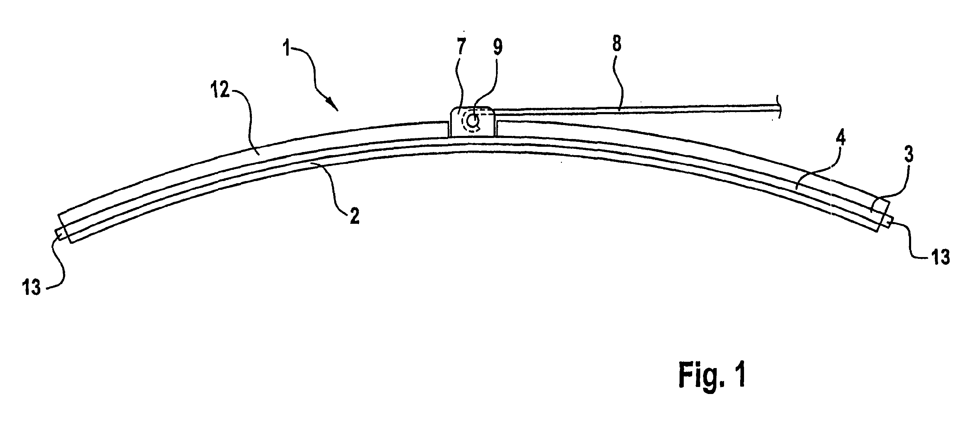

Die in Fig. 1 dargestellte Wischvorrichtung 1 für Kraftfahrzeuge weist ein Wischblatt auf, welches ein Wischgummi 2 zeigt mit zwei gegenüberliegenden Längsnuten 3 - wobei in der Ansicht nach Fig. 1 lediglich eine Längsnut 3 zu sehen ist - in welchen ein Trageelement in Form von zwei bandartig, langgestreckten Federschienen 4 angeordnet ist. An den beiden Federschienen 4 ist ein Adapterelement 7 zum Verbinden des Wischblatts mit einem antreibbaren Wischarm 8 vorgesehen. Das dem Wischblatt zugewandte Ende des Wischarms 8 ist dabei hakenförmig ausgestaltet und umfasst einen Gelenkbolzen 9. Um insbesondere bei höheren Fahrtgeschwindigkeiten eine erhöhte Anpresskraft der Wischvorrichtung 1 auf die wischende, nicht dargestellte Scheibe zu erreichen, weist die der Scheibe abgewandte Seite des Wischgummis 2 einen spoilerartigen Ansatz 12 auf. An den freien Enden des Wischblatts ist an den Stirnseiten der Enden der sich gegenüberliegenden Federschienen 4 ein Verbindungselement 13 angeschweißt.

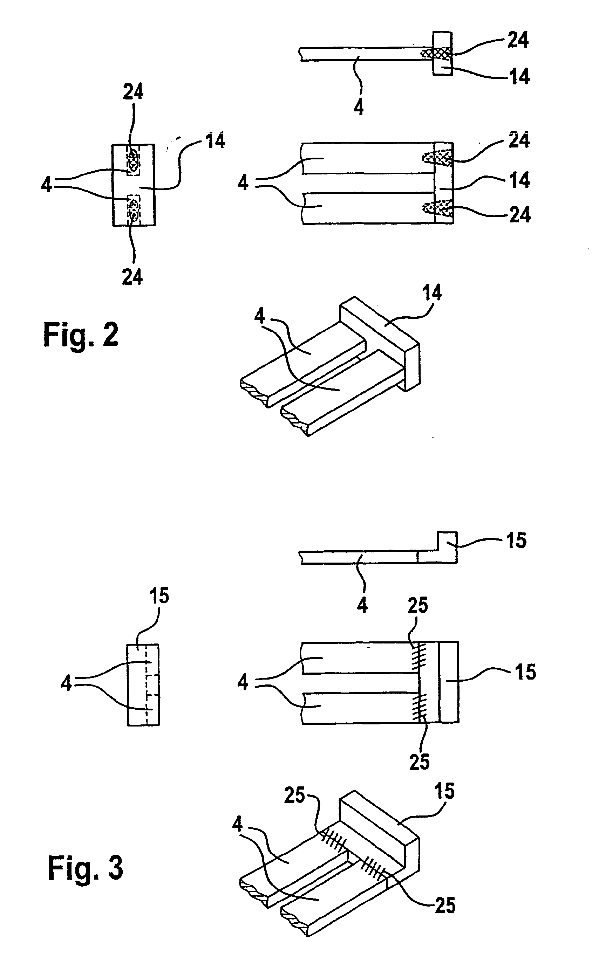

Wie in den Fign. 2 - 7 zu erkennen ist, sind verschiedene Arten von Verbindungselementen 13 denkbar, die verschiedenartig mit den Stirnseiten der Federschienen 4 verschweißt sind.

So zeigt beispielsweise Fig. 2 ein flach ausgebildetes Verbindungselement 14, das T-stoßartig mit den beiden Stirnseiten der Enden der sich gegenüberliegenden Federschienen 4 verschweißt ist. Die in Fig. 2 dargestellten Schweißstellen 24 zeigen eine zu den Stirnseiten der Enden der sich gegenüberliegenden Federschienen 4 senkrecht erfolgte Schweißung, wobei die Stirnseiten der Federschieden 4 an den Berührungsstellen mit dem Verbindungselement 14 verbunden sind. Eine derartige Schweißung lässt sich insbesondere mittels der Laserschweiß-Technologie realisieren. Besonderer Vorteil einer derartigen Verschweißung ist, dass keine nach außen hin sichtbaren Schweißnähte auftreten. Eine solche Schweißung hat außerdem den Vorteil, dass eine möglich Korrosion an den Stirnseiten der Federschienen 4 nicht, bzw. nicht nach außen hin sichtbar auftritt.

Fig. 3 zeigt eine andere erfindungsgemäße Ausführungsform, bei der ein Verbindungselement 15, welches ein L-Profil aufweist, mit den Stirnseiten der beiden Federschienen 4 verschweißt ist. Gezeigt sind zwei an der Oberfläche der Federschienen 4 sowie des Verbindungselements 15 vorhandene Schweißnähte 25. Solche Schweißnähte 25 haben jedoch den Nachteil, dass sie der Witterung ausgesetzt sind und korrosionsanfällig sind. Das in Fig. 3 gezeigte Verbindungselement 15 hat den Vorteil, dass es mit der Ober- und Unterseite der beiden Federschienen 4 plan abschließt, sodass ein Wischgummi auf dem Verbindungselement 15 zur Abstützung zum Aufliegen kommen kann.

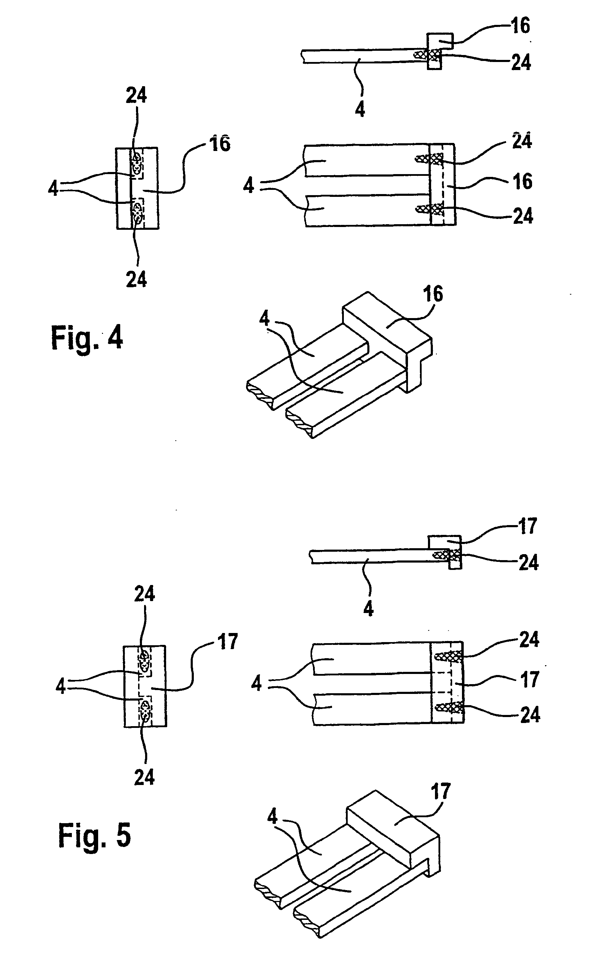

In Fig. 4 und 5 sind zwei verschiedene Ausführungsformen gezeigt, bei denen zwei Verbindungselemente 16 und 17 jeweils einen L-förmigen Querschnitt aufweisen. Die Verbindungselemente 16 und 17 sind dabei entsprechend dem Verbindungselement 14 nach Fig. 2 vorzugsweise an die Stirnseiten der Federschienen 4 laserverschweißt.

Die Verbindungselemente 14, 15, 16, 17 gemäß den Ausführungsformen nach Fig. 2 - 5 haben insbesondere den Vorteil, dass sie durch Ablängen eines Endlosbandes, welches das gewünschte Profil aufweist, auf einfache Art und Weise herstellbar sind. Dabei ist denkbar, das bandartige Endlosprofil an die Stirnseiten der Federschienen 4 heranzuführen, und mit diesen zunächst zu verschweißen, und dann die Verbindungselemente 14 - 17 auf die vorgesehenen Abmessungen abzulängen. Vorteilhafterweise kann durch die Verwendung eines Laserschweißers zum einen die Schweißverbindung hergestellt und zum anderen kann das Verbindungselement auf die gewünschte Länge abgelängt werden.

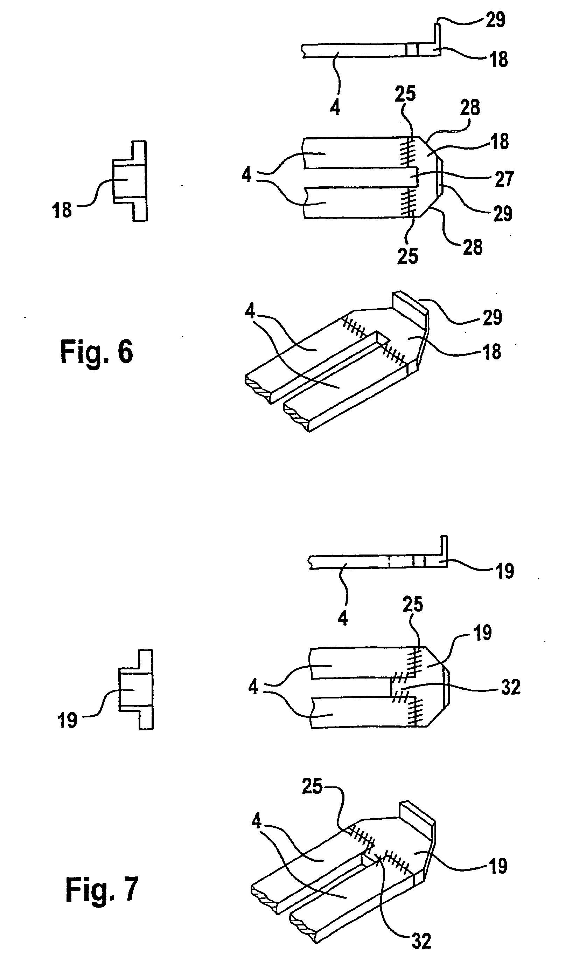

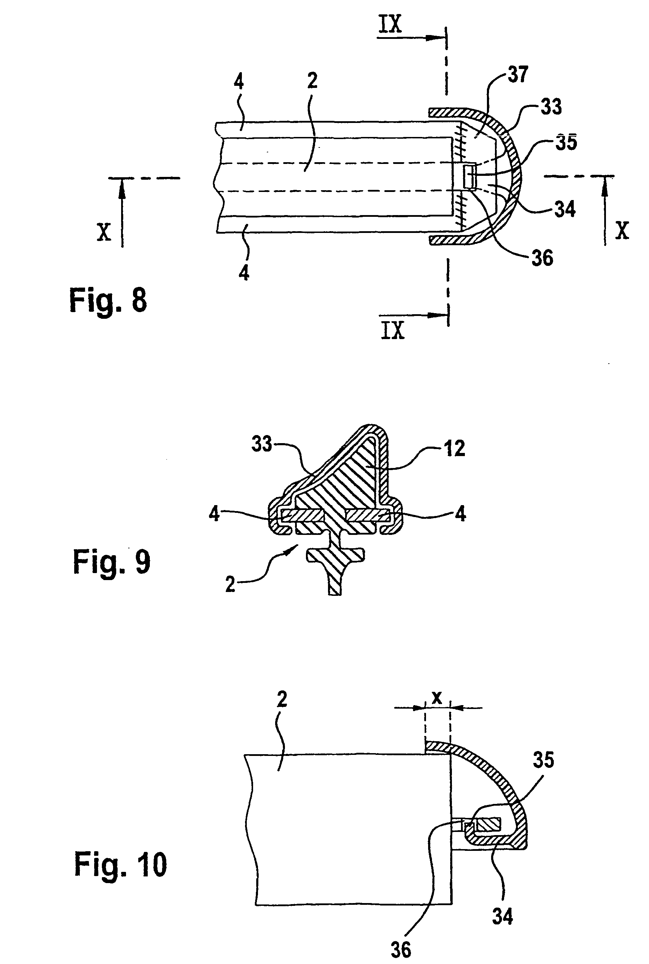

Die in den Fign. 6 und 7 gezeigten Verbindungselemente 18 und 19 sind der Art ausgestaltet, dass sie sich besonders dafür eignen, von einer Abdeckkappe hintergriffen zu werden, wie in Fig. 8 dargestellt ist. Das Verbindungselement 18 sieht dabei auf der den Federschienen 4 zugewandten Seite im Bereich zwischen den Federschienen 4 eine Aussparung 27 vor. Außerdem weist das Verbindungselement auf der den Federschienen 4 abgewandten Seite zwei Anfasungen 28 auf, die zum einen zu einer Gewichtsreduzierung und zum andern zu einer Verkleinerung des Verbindungselements 18 führen. An der Längsseite des Verbindungselements 18 befindet sich zwischen den beiden Anfasungen 28 ein Steg 29, der als Anschlag bzw. auch als Aufnahmeelement für eine in der Fig. 6 nicht dargestellte Abdeckkappe vorgesehen sein kann.

Das in Fig. 7 dargestellte Verbindungselement 19 unterscheidet sich von dem Verbindungselement 18 gemäß Fig. 6 dadurch, dass es keine Aussparung 27, sondern auf der den Federschienen 4 zugewandten Seite im Bereich zwischen den Federschienen 4 einen Vorsprung 32 vorsieht. Der Vorsprung kann dabei zum einen als Auflagefläche für das Wischgummi, zum andern als Distanzhalter zwischen den beiden Federschienen 4 Verwendung finden.

Die Verbindungselemente 18 und 19 gemäß Fig. 6 und 7 sind mit den jeweiligen Federschienen 4 mittels den Schweißnähten 25 verschweißt. Denkbar ist, dass anstelle der Schweißnähte 25 eine Verschweißung gemäß Fig. 1 vorgesehen wird, bei der die Stirnseiten der Federschienen 4 an den Berührungsstellen mit dem Verbindungselement 18 oder 19 verbunden werden.

In den Fign. 8 - 10 ist eine Ausführungsform mit einer Abdeckkappe 33 dargestellt. Wie aus Fig. 8 deutlich hervorgeht, weist die Abdeckkappe 33 eine Schnappzunge 34 mit einer Rastnase 35 auf, die in eine Aussparung 36 an dem Verbindungselement 37 schnappbar eingreift.

Wie aus dem in Fig. 9 gezeigten Schnitt gezeigt ist, ist die Abdeckkappe 33 spoilerartig ausgestaltet, sodass sie den Spoiler 12 des Wischgummis 2 umschließt.

In dem Schnitt gemäß Fig. 10 ist die Schnappzunge 34 mit der Rastnase 35, die in die Aussparung 36 eingreift, deutlich zu erkennen. Aus Fig. 8 und 10 geht außerdem hervor, dass die Abdeckkappe 33 das Wischgummi 2 in dem mit x gekennzeichneten Kappenabdeckbereich überdeckt. Dieser Kappenabdeckbereich x ist der Art ausgelegt, dass die Längenänderungen des Wischgummis 2 aufgrund der natürlichen Schrumpfung des Wischgummis 2 und dem Temperaturwechsel, dem das Wischgummi 2 ausgesetzt ist, berücksichtigt sind.

Die in Fig. 8 - 10 gezeigte Abdeckkappe 33 kann dabei so ausgestaltet werden, dass sie passgenau die aus dem Wischgummi herausstehenden Bereiche der beiden Federschienen 4 umfasst, sodass zusammen mit dieser Passverbindung die Abdeckkappe 33 nicht, oder nur schwer lösbar, und dennoch einfach montierbar, mit dem Wischblatt verbunden ist.

## Patentansprüche

1. Wischblatt, insbesondere für Kraftfahrzeuge, welches ein Wischgummi (2) mit zwei einander gegenüberliegenden Längsnuten (3) und ein Trageelement in Form von zwei in den Längsnuten (3) angeordneten bandartigen, langgestreckten Federschienen (4) aufweist, wobei an dem Trageelement ein Adapterelement (7) zum Verbinden des Wischblattes mit einem antreibbaren Wischarm (8) vorgesehen ist und wobei wenigstens an einem der freien Enden des Wischblatts ein sich in Querrichtung erstreckendes Verbindungselement zum Verbinden der sich gegenüberliegenden Federschienenenden vorgesehen ist, **dadurch gekennzeichnet, dass** das Verbindungselement (13 - 19, 37) an die beiden Stirnseiten der Enden der sich gegenüberliegenden Federschienen (4) angeschweißt ist.

2. Wischblatt nach Anspruch 1, **dadurch gekennzeichnet, dass** die Schweißung senkrecht zu den Stirnseiten der Enden der sich gegenüberliegenden Federschienen (4) erfolgt, wobei die Stirnseiten der Federschienen (4) an den Berührungsstellen mit dem Verbindungselement (13 - 16) miteinander verbunden werden.

3. Wischblatt nach Anspruch 1 oder 2, **dadurch gekennzeichnet, dass** die Schweißung eine LaserSchweißung ist.

4. Wischblatt nach Anspruch 1, 2 oder 3, **dadurch gekennzeichnet, dass** eine Abdeckkappe (33) zum Abdecken des Verbindungselements (37) vorgesehen ist.

5. Wischblatt nach Anspruch 4, **dadurch gekennzeichnet, dass** die Abdeckkappe (33) das Verbindungselement (37) hinterschnappt.

6. Wischblatt nach einem der vorhergehenden Ansprüche, **dadurch gekennzeichnet, dass** das Verbindungselement (14) ein Flachelement ist, das als T-Stoß mit den Stirnseiten der beiden Federschienen (4) verbunden ist.

7. Wischblatt nach Anspruch 4, 5 oder 6, **dadurch gekennzeichnet, dass** die Abdeckkappe den T-Stoß hinterschnappt.

8. Wischblatt nach einem der vorhergehenden Ansprüche, **dadurch gekennzeichnet, dass** das Verbindungselement (18, 37) auf der den Federschienen (4) zugewandten Seite im Bereich zwischen den Federschienen (4) eine Aussparung (27, 36) aufweist.

9. Wischblatt nach Anspruch 8, **dadurch gekennzeichnet, dass** die Abdeckkappe (33) die Aussparung (36) hinterschnappt.

10. Wischblatt nach einem der vorhergehenden Ansprüche, **dadurch gekennzeichnet, dass** das Verbindungselement (19) auf der den Federschienen (4) zugewandten Seite im Bereich zwischen den Federschienen (4) einen Vorsprung (32) aufweist.

11. Wischblatt nach einem der vorhergehenden Ansprüche, **dadurch gekennzeichnet, dass** die Federschienen (4) bis auf die Stirnseiten mit einer Beschichtung, insbesondere einem Korrosionsschutzmittel, beschichtet sind und dass das Verbindungselement (13-19) aus einem nichtkorrodierenden Material ist.

12. Wischblatt nach einem der vorhergehenden Ansprüche, **dadurch gekennzeichnet, dass** die der Scheibe abgewandte Seite des Wischgummis (2) eine spoilerartige Ausgestaltung (12) aufweist, wobei die der Scheibe abgewandte Seite der Abdeckkappe (33) entsprechend spoilerartig ausgestaltet ist.

13. Wischvorrichtung (1), insbesondere für Kraftfahrzeuge, **gekennzeichnet durch** die Verwendung eines Wischblattes gemäß einem der vorhergehenden Ansprüche.

14. Verfahren zur Herstellung eines Wischblattes nach einem der Ansprüche 1-12 oder zur Herstellung einer Wischvorrichtung (1) nach Anspruch 13, **dadurch gekennzeichnet, dass** ein bandartigartiges Verbindungsmaterial an die Stirnseiten der Federschienen (4) herangeführt wird, dass das bandartige Verbindungsmaterial mit den Stirnseiten der Federschienen (4) laserverschweißt wird und dass in einem nächsten Arbeitsschritt das bandartige Verbindungsmaterial auf die Abmessungen des Verbindungselements (13 - 17) lasergetrennt wird.

15. Verfahren nach Anspruch 14, **dadurch gekennzeichnet, dass** das Laserschweißen und Lasertrennen mittels einer Laserschweiß- und Trennvorrichtung erfolgt.

## Claims

1. Wiper blade, in particular for motor vehicles, which comprises a wiper rubber (2) with two longitudinal grooves (3) which are arranged opposite one another and a support element in the form of two strip-like elongate spring rails (4) which are arranged in the longitudinal grooves (3), wherein an adapter element (7) is provided on the support element in order to connect the wiper blade to a drivable wiper arm (8), and wherein a connecting element which extends in the transverse direction is provided at least at one of the free ends of the wiper blade in order to connect the spring rail ends which are arranged opposite one another, **characterized in that** the connecting element (13-19, 37) is welded to the two end sides of the ends of the spring rails (4) which are arranged opposite one another.

2. Wiper blade according to Claim 1, **characterized in that** the welding takes place perpendicular to the end sides of the ends of the spring rails (4) which are arranged opposite one another, wherein the end sides of the spring rails (4) are connected to one another by the connecting element (13-16) at the contact points.

3. Wiper blade according to Claim 1 or 2, **characterized in that** the welding is a laser welding.

4. Wiper blade according to Claim 1, 2 or 3, **characterized in that** a cover cap (33) is provided for covering the connecting element (37).

5. Wiper blade according to Claim 4, **characterized in that** the cover cap (33) snaps behind the connecting element (37).

6. Wiper blade according to one of the preceding claims, **characterized in that** the connecting element (14) is a flat element which is connected as a T-joint to the end sides of the two spring rails (4).

7. Wiper blade according to Claim 4, 5 or 6, **characterized in that** the cover cap snaps behind the T-joint.

8. Wiper blade according to one of the preceding claims, **characterized in that** the connecting element (18, 37) has a cutout (27, 36) on the side facing towards the spring rails (4) in the region between the spring rails (4).

9. Wiper blade according to Claim 8, **characterized in that** the cover cap (33) snaps behind the cutout (36).

10. Wiper blade according to one of the preceding claims, **characterized in that** the connecting element (19) has a protrusion (32) on the side facing towards the spring rails (4) in the region between the spring rails (4).

11. Wiper blade according to one of the preceding claims, **characterized in that** the spring rails (4), apart from the end sides, are coated with a coating, in particular an anti-corrosion agent, and **in that** the connecting element (13-19) is made from a non-corrosive material.

12. Wiper blade according to one of the preceding claims, **characterized in that** the side of the wiper rubber (2) which faces away from the windscreen has a spoiler-like configuration (12), wherein the side of the cover cap (33) which faces away from the windscreen is configured like a spoiler in a corresponding manner.

13. Wiping device (1), in particular for motor vehicles, **characterized by** the use of a wiper blade according to one of the preceding claims.

14. Method for producing a wiper blade according to one of Claims 1-12 or for producing a wiping device (1) according to Claim 13, **characterized in that** a strip-like connecting material is applied to the end sides of the spring rails (4), **in that** the strip-like connecting material is laser-welded to the end sides of the spring rails (4), and **in that**, in a next operating step, the strip-like connecting material is laser-cut to the dimensions of the connecting element (13-17).

15. Method according to Claim 14, **characterized in that** the laser welding and the laser cutting are carried out by means of a laser welding and cutting device.

## Revendications

1. Balai d'essuie-glace, en particulier pour véhicules automobiles, qui présente un caoutchouc d'essuie-glace (2) comportant deux rainures longitudinales (3) opposées l'une à l'autre et un élément de support sous la forme de deux rails flexibles (4) étendus en longueur disposés dans les rainures longitudinales (3), moyennant quoi sur l'élément de support est prévu un élément adaptateur (7) pour l'assemblage du balai d'essuie-glace à un bras d'essuie-glace (8) pouvant être entraîné, et moyennant quoi au moins à une des extrémités libres du balai d'essuie-glace est prévu un élément d'assemblage s'étendant en direction transversale pour l'assemblage des extrémités opposées l'une à l'autre des rails flexibles, **caractérisé en ce que** l'élément d'assemblage (13-19, 37) est soudé sur les deux faces avant des extrémités des rails flexibles (4) opposés l'un à l'autre.

2. Balai d'essuie-glace selon la revendication 1, **caractérisé en ce que** la soudure est effectuée perpendiculairement aux faces avant des extrémités des rails flexibles (4) opposés l'un à l'autre, moyennant quoi les faces avant des rails flexibles (4) sont assemblées l'une à l'autre aux points de contact avec l'élément d'assemblage (13-16).

3. Balai d'essuie-glace selon la revendication 1 ou 2, **caractérisé en ce que** la soudure est une soudure laser.

4. Balai d'essuie-glace selon la revendication 1, 2 ou 3, **caractérisé en ce qu'**un capuchon de protection (33) est prévu pour la protection de l'élément d'assemblage (37).

5. Balai d'essuie-glace selon la revendication 4, **caractérisé en ce que** le capuchon de protection (33) enserre l'élément d'assemblage (37) par l'arrière.

6. Balai d'essuie-glace selon une des revendications précédentes, **caractérisé en ce que** l'élément d'assemblage (14) est un élément plat qui est assemblé aux faces avant des deux rails flexibles (4) sous la forme d'un joint en T.

7. Balai d'essuie-glace selon la revendication 4, 5 ou 6, **caractérisé en ce que** le capuchon de protection enserre le joint en T par l'arrière.

8. Balai d'essuie-glace selon une des revendications précédentes, **caractérisé en ce que** l'élément d'assemblage (18, 37) présente un évidement (27, 36) sur l'extrémité tournée vers les rails flexibles (4) dans la zone située entre les rails flexibles (4).

9. Balai d'essuie-glace selon la revendication 8, **caractérisé en ce que** le capuchon de protection (33) enserre l'évidement (36) par l'arrière.

10. Balai d'essuie-glace selon une des revendications précédentes, **caractérisé en ce que** l'élément d'assemblage (19) présente une partie en saillie (32) sur la face tournée vers les rails flexibles (4) dans la zone située entre les rails flexibles (4).

11. Balai d'essuie-glace selon une des revendications précédentes, **caractérisé en ce que** les rails flexibles (4) sont revêtus jusqu'aux faces avant d'un revêtement, en particulier un agent anti-corrosion, et **en ce que** l'élément d'assemblage (13-19) est constitué d'un matériau inoxydable.

12. Balai d'essuie-glace selon une des revendications précédentes, **caractérisé en ce que** la face du caoutchouc d'essuie-glace (2) opposée à la vitre présente une configuration de type spoiler (12), la face du capuchon de protection (33) opposée à la vitre étant configurée à la manière d'un spoiler correspondant.

13. Système d'essuie-glace (1), en particulier pour des véhicules automobiles, **caractérisé par** l'utilisation d'un balai d'essuie-glace selon une des revendications précédentes.

14. Procédé de fabrication d'un balai d'essuie-glace selon une des revendications 1 à 12 ou de fabrication d'un système d'essuie-glace (1) selon la revendication 13, **caractérisé en ce qu'**un matériau d'assemblage en forme de bande est amené sur les faces avant des rails flexibles (4), **en ce que** le matériau d'assemblage en forme de bande est soudé au laser aux faces avant des rails flexibles (4), et **en ce que** dans une étape suivante du procédé, le matériau d'assemblage en forme de bande est coupé au laser aux dimensions de l'élément d'assemblage (13-17).

15. Procédé selon la revendication précédente, **caractérisé en ce que** le soudage au laser et la coupe au laser sont effectués au moyen d'un dispositif de soudage et de coupe au laser.
